# EUROPEAN PATENT APPLICATION

(11) **EP 3 276 883 A1**
(43) Date of publication of application: **31.01.2018**
(21) Application number: 15886993.3
(22) Date of filing: 03.04.2015
(51) Int. Cl.: H04L 12/24

(54) **NETWORK MANAGEMENT SYSTEM, DEVICE AND METHOD**

(71) Applicant: Huawei Technologies Co., Ltd., Longgang District Shenzhen, Guangdong 518129 (CN)
(72) Inventor: JI, Li, Shenzhen Guangdong 518129 (CN); ZOU, Lan, Shenzhen Guangdong 518129 (CN)
(74) Representative: Thun, Clemens
(86) International application number: PCT/CN2015/075926
(87) International publication number: WO 2016/155023

(57) **Abstract**

The present invention provides a network management system, device, and method, and relates to the field of communications technologies, so as to resolve a problem that load of an OSS increases because of complex and cumbersome functions of the OSS in an existing NFV architecture. The network management system provided in the present invention includes: an operations support device OSS, a domain function entity, and at least one virtual function node. The OSS is configured to: receive a service request of a user, and send the service request to the domain function entity. The domain function entity is configured to: receive the service request sent by the OSS, obtain an analysis result according to the service request and an analysis algorithm corresponding to the service request, and send the analysis result to a first virtual network function node corresponding to the service request. The first virtual network function node is configured to: perform related processing according to the analysis result sent by the domain function entity, and send a processing result to the domain function entity. The domain function entity is further configured to feed back the processing result to the OSS.

## Description

The present invention relates to the field of communications technologies, and in particular, to a network management system, device, and method.

### BACKGROUND

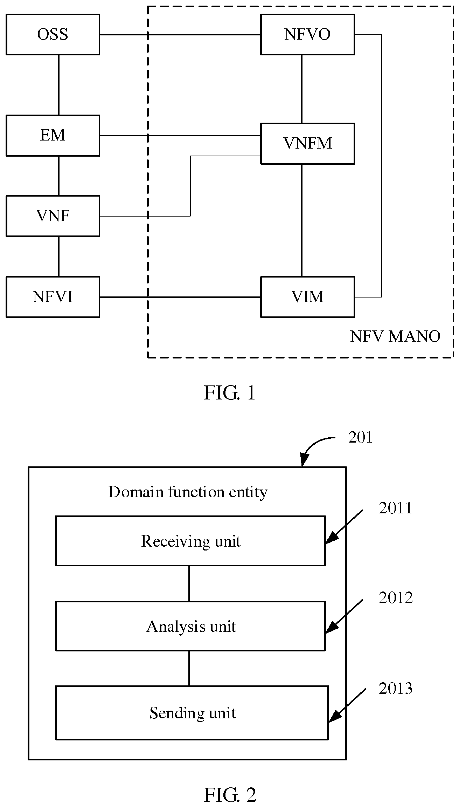

With development of network communications technologies, as shown in FIG. 1, an existing network system architecture defined by a network functions virtualization (network function virtualization, NFV for short) standard may include an operations support device (operations support system, OSS for short), at least one element manager (element management, EM for short), and the following several virtual function nodes: a virtualized network function (virtualized network function, VNF for short), a network functions virtualization infrastructure (NFV infrastructure, NFVI for short), and a network functions virtualization management and orchestration (NFV Management and Orchestration, NFV MANO for short).

Each VNF is provided with a corresponding EM for performing operation and management on the VNF. The NFVI is the most basic infrastructure in the NFV architecture, and mainly includes three functional blocks: virtualized resources (Virtualised Resources), a virtualization layer (Virtualisation Layer), and physical resources (Hardware Resources). The physical resources include three types of hardware resources: a calculation resource, a storage resource, and a network resource. The virtualization layer is located between the physical resources and the virtualized resources, and virtualizes the hardware resources into virtualized resources that may be dynamically requested for use, so as to provide the virtualized resources for the VNF. The NFV MANO plays a significant role in performing overall control, management, and orchestration in the NFV architecture, and mainly includes three parts: a network functions virtualization orchestrator (NFV Orchestrator, NFVO for short), a virtualized network function manager (VNF Manager, VNFM for short), and a virtualized infrastructure manager (Virtualised Infrastructure Manager, VIM for short). When software and hardware resources are required, the NFV MANO performs orchestration, authentication, and authorization for a request for related resources, and is responsible for managing a lifecycle of the VNF, such as instantiating, flexibly organizing, updating, querying, or terminating the VNF. In addition, the NFV MANO is also responsible for policy management (Policy Management) of a network service, collecting and forwarding of an associated event, and configuration of related resources for an infrastructure, such as adding resources to a virtual machine, improving energy efficiency, or returning resources. The OSS represents operations support devices of an operator, and is responsible for network management services of different domains (such as a fixed network domain or a mobile network domain) of the operator, such as alarming, traffic measurement, configuration management, or network planning. When providing various convenience services for a user, the OSS performs orchestration and configuration on public resources according to an operation service mode and a charging principle that are of the user.

Because the OSS may carry service requirements of different domains of an operator, the OSS needs to configure policies for service requirements of different domains according to different algorithms. Consequently, functions of the OSS become complex and cumbersome, thereby increasing load of the OSS.

### SUMMARY

Embodiments of the present invention provide a network management system, device, and method, so as to resolve a problem that load of an OSS increases because of complex and cumbersome functions of the OSS in an existing NFV architecture.

To achieve the foregoing objective, the following technical solutions are used in the embodiments of the present invention:

According to a first aspect, an embodiment of the present invention provides a network management system, including: an operations support device OSS, a domain function entity, and at least one virtual function node, where
the OSS is configured to: receive a service request of a user, and send the service request to the domain function entity;
the domain function entity is configured to: receive the service request sent by the OSS, and
obtain an analysis result according to the service request and an analysis algorithm corresponding to the service request, and send the analysis result to a first virtual network function node corresponding to the service request;
the first virtual network function node is configured to: perform related processing according to the analysis result sent by the domain function entity, and send a processing result to the domain function entity; and
the domain function entity is further configured to: receive the processing result sent by the first virtual network function node, and feed back the processing result to the OSS.

With reference to the first aspect, in a first possible implementation of the first aspect,
the network management system includes at least one domain function entity;
the at least one domain function entity includes: a mobile network domain function entity and a fixed network domain function entity;
the mobile domain function entity is configured to process a service request of a mobile network; and
the fixed domain function entity is configured to process a service request of a fixed network.

With reference to the first possible implementation of the first aspect, in a second possible implementation of the first aspect,
the OSS is specifically configured to:
determine, according to the received service request, a network type corresponding to the service request; and
send the service request to a domain function entity corresponding to the network type, where
the network type includes: a mobile network and a fixed network.

With reference to any one of the first aspect, or the first to the second possible implementations of the first aspect, in a third possible implementation of the first aspect,
the at least one virtual function node includes: at least any one or more of a virtualized network function VNF, a network functions virtualization infrastructure NFVI, or a network functions virtualization management and orchestration NFV MANO;
the network management system further includes an element manager EM, where the EM is configured to manage at least one VNF; and
the OSS is connected to the domain function entity, and the domain function entity is connected to the EM and the NFV MANO.

According to a second aspect, an embodiment of the present invention provides a domain function entity, including:
a receiving unit, configured to receive a service request sent by an OSS;
an analysis unit, configured to obtain an analysis result according to the service request received by the receiving unit and an analysis algorithm corresponding to the service request; and
a sending unit, configured to send the analysis result to the first virtual network function node that is on a device including at least one virtual function node and that is corresponding to the service request, so that the first virtual function node performs processing according to the analysis result, where
the receiving unit is further configured to receive a processing result sent by the first virtual function node; and
the sending unit is further configured to send the processing result to the OSS.

With reference to the second aspect, in a first possible implementation of the second aspect,
the domain function entity is a mobile domain function entity or a fixed domain function entity;
the mobile domain function entity is configured to process a service request of a mobile network; and
the fixed domain function entity is configured to process a service request of a fixed network.

According to a third aspect, an embodiment of the present invention provides an operations support device OSS, including:
a receiving unit, configured to receive a service request of a user; and
a sending unit, configured to send the service request to a domain function entity, so that the domain function entity performs analysis and processing on the service request, where
the receiving unit is further configured to receive a processing result sent by the domain function entity.

With reference to the third aspect, in a first possible implementation of the third aspect, the OSS further includes:
a determining unit, configured to determine, according to the service request, a network type corresponding to the service request, where
the sending unit is specifically configured to send the service request to a domain function entity corresponding to the network type.

According to a fourth aspect, an embodiment of the present invention provides a network management method, applied to a domain function entity, and including:
receiving a service request sent by an OSS;
obtaining an analysis result according to the service request and an analysis algorithm corresponding to the service request;
sending the analysis result to the first virtual network function node that is on a device including at least one virtual function node and that is corresponding to the service request, so that the first virtual function node performs processing according to the analysis result; and
receiving a processing result sent by the first virtual function node, where the domain function entity is further configured to send the processing result to the OSS.

With reference to the fourth aspect, in a first possible implementation of the fourth aspect,
the domain function entity is a mobile domain function entity or a fixed domain function entity;
the mobile domain function entity is configured to process a service request of a mobile network; and
the fixed domain function entity is configured to process a service request of a fixed network.

According to a fifth aspect, an embodiment of the present invention provides a network management method, applied to an operations support device OSS, and including:
receiving a service request of a user;
sending the service request to a domain function entity, so that the domain function entity performs analysis and processing on the service request; and
receiving a processing result sent by the domain function entity.

With reference to the fifth aspect, in a first possible implementation of the fifth aspect,
after the receiving a service request of a user, the method further includes:
determining, according to the service request, a network type corresponding to the service request; and
the sending the service request to a domain function entity includes:
   sending the service request to a domain function entity corresponding to the network type.

According to a sixth aspect, an embodiment of the present invention provides a domain function entity, including:
a communications interface, configured to receive a service request sent by an OSS; and
a processor, configured to obtain an analysis result according to the service request received by the communications interface and an analysis algorithm corresponding to the service request, where
the communications interface is further configured to send the analysis result to the first virtual network function node that is on a device including at least one virtual function node and that is corresponding to the service request, so that the first virtual function node performs processing according to the analysis result; and
the communications interface is further configured to: receive a processing result sent by the first virtual function node, and send the processing result to the OSS.

With reference to the sixth aspect, in a first possible implementation of the sixth aspect,
the domain function entity is a mobile domain function entity or a fixed domain function entity;
the mobile domain function entity is configured to process a service request of a mobile network; and
the fixed domain function entity is configured to process a service request of a fixed network.

According to a seventh aspect, an embodiment of the present invention provides an operations support device OSS, including:
a communications interface, configured to receive a service request of a user, where
the communications interface is further configured to send the service request to a domain function entity, so that the domain function entity performs analysis and processing on the service request; and
the communications interface is further configured to receive a processing result sent by the domain function entity.

With reference to the seventh aspect, in a first possible implementation of the seventh aspect, the OSS further includes:
a processor, configured to determine, according to the service request, a network type corresponding to the service request, where
the communications interface is specifically configured to send the service request to a domain function entity corresponding to the network type.

It may be learned from the foregoing description that the embodiments of the present invention provide a network management system, device, and method. An OSS receives a service request of a user; sends the service request to a domain function entity, so that the domain function entity performs analysis and processing on the service request; and feeds back, to the user, a processing result fed back by the domain function entity. Therefore, the OSS no longer performs analysis and processing on a service request, thereby greatly reducing load of the OSS.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of an existing NFV architecture;
FIG. 2 is a structural diagram of a domain function entity 201 according to an embodiment of the present invention;
FIG. 3 is a structural diagram of an OSS 202 according to an embodiment of the present invention;
FIG. 3A is a structural diagram of an OSS 202 according to an embodiment of the present invention;
FIG. 4 is a diagram of an architecture of a network management system 20 according to an embodiment of the present invention;
FIG. 4A is a diagram of an architecture of a network management system 20 according to an embodiment of the present invention;
FIG. 5 is a flowchart of a network management method according to an embodiment of the present invention;
FIG. 6 is a flowchart of a network management method according to an embodiment of the present invention;
FIG. 7 is a flowchart of a network management method according to an embodiment of the present invention;
FIG. 7A is a flowchart of a network management method according to an embodiment of the present invention;
FIG. 7B is a flowchart of still another network management method according to an embodiment of the present invention;
FIG. 7C is a flowchart of another network management method according to an embodiment of the present invention;
FIG. 8 is a structural diagram of a domain function entity 401 according to an embodiment of the present invention;
FIG. 9 is a structural diagram of an OSS 402 according to an embodiment of the present invention; and
FIG. 10 is a diagram of an architecture of a network management system 40 according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

### Embodiment 1

FIG. 2 is a structural diagram of a domain function entity 201 according to an embodiment of the present invention. The domain function entity may be connected to a virtual function node by using an internal management interface of an operator, and is responsible for network management functions, such as alarming, traffic measurement, configuration management, or network planning, of a network of a type corresponding to each domain function entity.

As shown in FIG. 2, the domain function entity 201 may include:
a receiving unit 2011, configured to receive a service request sent by an OSS;
an analysis unit 2012, configured to obtain an analysis result according to the service request and an analysis algorithm corresponding to the service request; and
a sending unit 2013, configured to send the analysis result to the first virtual network function node that is on a device including at least one virtual function node and that is corresponding to the service request.

The first virtual network function node corresponding to the service request may be a virtual network function node that performs related processing according to the analysis result and whose processing result can meet the service request of the user.

The receiving unit 2011 is further configured to receive a processing result returned by the first virtual function node after the first virtual function node performs processing according to the analysis result.

For example, if a user requests video performance data, the processing result includes data of some performance parameters (such as an initial buffer delay, a quantity of interruption times, and an interruption delay) in the analysis result; or if the service request is a request for adding a new virtual network element node, the processing result is as follows: virtual resources are correspondingly combined according to the analysis result.

The sending unit is further configured to send the processing result to the OSS.

It should be noted that in this embodiment of the present invention, the domain function entity uses different analysis algorithms to perform processing for different service requests. The analysis algorithm may be an algorithm used by an OSS in an existing NFV architecture for a service request received by the OSS, or may be an algorithm innovated later with development of communications technologies.

For example, if the service request is a video performance data request, an analysis algorithm corresponding to the service request may be an algorithm that can be used to accurately obtain specific parameters (such as an initial buffer delay, a quantity of interruption times, and an interruption delay) that reflect video performance, and that can be used to perform pre-analysis after video performance data is received; for example, a mean opinion score (mean opinion score, MOS) algorithm is used to calculate a score of customer experience to represent customer experience, and the score of customer experience is fed back to the OSS.

If the service request is a request for adding a new virtual network element node, an analysis algorithm corresponding to the service request is an algorithm that can be used to quantitatively calculate a quantity of virtual resources (such as a computing resource, a storage resource, and a network resource) that need to be combined to implement a function of the network element entity.

Optionally, in this embodiment of the present invention, the domain function entity processes service requests of only one domain, so as to avoid inconvenience caused by cross network service processing, and avoid a problem that load of a domain function entity increases when processing functions of different domains are implemented by the domain function entity. The domain function entity may be a mobile domain function entity, may be a fixed domain function entity, or may be a domain function entity of another new domain added with development of communications technologies.

The mobile domain function entity is configured to process a service request of a mobile network.

The fixed domain function entity is configured to process a service request of a fixed network.

It may be learned from the foregoing description that this embodiment of the present invention provides a domain function entity, configured to: receive a service request sent by an OSS; obtain an analysis result according to the service request and an analysis algorithm corresponding to the service request; send the analysis result to the first virtual network function node that is on a device including at least one virtual function node and that is corresponding to the service request; receive a processing result fed back by the device after the device performs processing according to the analysis result; and send the processing result to the OSS. Therefore, the domain function entity replaces the OSS to perform an execution function of obtaining an analysis result according to a service request and an analysis algorithm corresponding to the service request, thereby greatly reducing load of the OSS.

### Embodiment 2

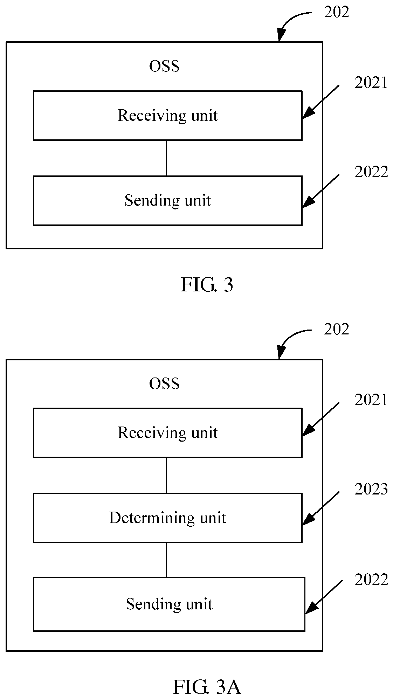

FIG. 3 is a structural diagram of an OSS 202 according to an embodiment of the present invention. Different from a conventional network management node, the OSS 202 is no longer responsible for a network management function of a network, such as alarming, traffic measurement, configuration management, or network planning, but is connected to a domain function entity by using an internal management interface of an operator. The OSS 202 sends a received service request to a corresponding domain function entity, so that the domain function entity performs a related processing function according to the service request.

As shown in FIG. 3, the OSS 202 may include a receiving unit 2021 and a sending unit 2022.

The receiving unit 2021 is configured to receive a service request of a user.

The service request may be sent by the user by using a user interaction interface of the OSS 202, or may be sent by the user by using a handheld terminal of the user.

The sending unit 2022 is configured to send the service request to a domain function entity, so that the domain function entity performs analysis and processing on the service request.

The receiving unit 2021 is further configured to receive a processing result fed back by the domain function entity.

Optionally, the OSS 202 may further feed back the processing result to the user by using the user interaction interface; or
send the processing result to a handheld terminal of the user, so that the user can select and view the processing result.

Optionally, in this embodiment of the present invention, the service request further needs to be sent to a specialized domain function entity, so as to avoid inconvenience caused by cross network service processing, and avoid a problem that load of a domain function entity increases when processing functions of different domains are implemented by the domain function entity. Specifically, as shown in FIG. 3A, the OSS 202 may further include:
a determining unit 2023, configured to determine, according to the service request, a network type corresponding to the service request.

The receiving unit 2021 is specifically configured to send the service request to a domain function entity corresponding to the network type.

The network type may include: a fixed network, a mobile network, and another new network added later with development of communications technologies.

The network type corresponding to the service request may be a network type of a network on which a user that sends the service request is located; for example, if a mobile network user sends the service request, the network type corresponding to the service request is a mobile network.

The domain function entity corresponding to the network type is a domain function entity specially configured to perform related processing according to a service request sent by a network of this network type. The domain function entity may be a mobile domain function entity, or may be a fixed domain function entity. The mobile domain function entity is configured to process a service request of a mobile network. The fixed domain function entity is configured to process a service request of a fixed network.

For example, if a service request is from a mobile network, the network type is a mobile network. Because a domain function entity 1 processes only mobile network services, and a domain function entity 2 processes only fixed network services, a domain function entity corresponding to the service request is the domain function entity 1 instead of the domain function entity 2.

It may be learned from the foregoing description that this embodiment of the present invention provides an OSS, configured to: receive a service request of a user; send the service request to a domain function entity, so that the domain function entity performs analysis and processing on the service request; and feed back, to the user, a processing result fed back by the domain function entity. Therefore, the OSS no longer performs analysis and processing on a service request, thereby greatly reducing load of the OSS.

### Embodiment 3

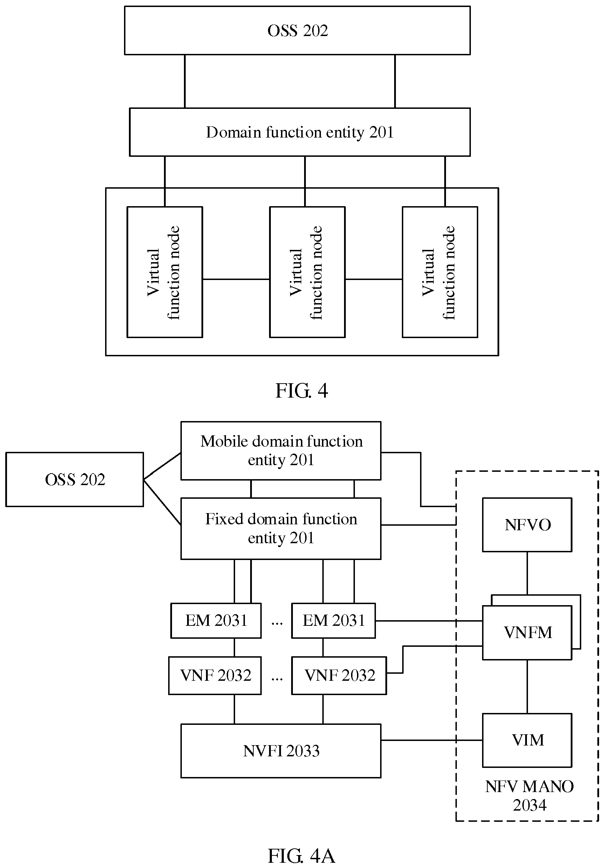

FIG. 4 shows a diagram of an architecture of a network management system 20 according to an embodiment of the present invention. As shown in FIG. 4, the network management system 20 may include: an OSS 202, at least one domain function entity 201, and at least one virtual function node.

The OSS 202 has functions same as those of the OSS 202 in Embodiment 1. Different from a conventional network management node, the OSS 202 is no longer responsible for a network management function of a network, such as alarming, traffic measurement, configuration management, or network planning, but is connected to a domain function entity by using an internal management interface of an operator. The OSS 202 sends a received service request to a corresponding domain function entity, so that the domain function entity performs a related processing function according to the service request.

The domain function entity 201 has functions same as those of the domain function entity 201 in Embodiment 2. The domain function entity 201 may be connected to a virtual function node by using an internal management interface of an operator, and is responsible for a network management function of a network of a type corresponding to each domain function entity, such as alarming, traffic measurement, configuration management, or network planning.

The virtual function node may be located on any shared device that is used by an operator to provide a network service; for example, the virtual function node is located on a shared server, a storage device, or a switch. The virtual function node is a node that is obtained by using a standard virtualization technology and that has functions same as those of various information infrastructure devices deployed in a data center, on a network node, or on premises of an end user, such as a router, a firewall, a load balancer, a switch, or a server. The virtual function node no longer directly interacts with the OSS, but is connected to the domain function entity 201 by using an internal management interface of the operator, so as to provide various services for a user.

The OSS 202 is configured to: receive a service request of a user, and send the service request to the domain function entity 201.

The service request may be sent by the user by using a user interaction interface of the OSS 202; or
may be sent to the OSS 202 by the user by using a handheld terminal of the user.

The domain function entity 201 is configured to: receive the service request sent by the OSS 202, obtain an analysis result according to the service request and an analysis algorithm corresponding to the service request, and send the analysis result to the first virtual network function node corresponding to the service request.

According to a source, a service request may be classified into: a mobile network service request, a fixed network service request, and another network service request.

It should be noted that in this embodiment of the present invention, the domain function entity uses different analysis algorithms to perform processing for different service requests. The analysis algorithm may be an algorithm used by an OSS in an existing NFV architecture for a service request received by the OSS, or may be an algorithm innovated later with development of communications technologies.

For example, if the service request is a video performance data request, an analysis algorithm corresponding to the service request may be an algorithm that can be used to accurately obtain specific parameters (such as an initial buffer delay, a quantity of interruption times, and an interruption delay) that reflect video performance, and that can be used to perform presupposition analysis after video performance data is collected; for example, a mean opinion score (mean opinion score, MOS) algorithm is used to calculate a score of customer experience to represent customer experience, and the score of customer experience is fed back to the OSS. If the service request is a request for adding a new virtual network element node, an analysis algorithm corresponding to the service request is an algorithm that can be used to quantitatively calculate a quantity of virtual resources (such as a computing resource, a storage resource, and a network resource) that need to be combined to implement a function of the network element entity.

The first virtual network function node corresponding to the service request may be a virtual network function node that performs related processing according to the analysis result and whose processing result can meet the service request of the user.

The first virtual network function node is configured to: perform related processing according to the analysis result sent by the domain function entity 201, and send a processing result to the domain function entity 201.

The related processing for different analysis results may be the prior art, such as finding a corresponding node and collecting related information. Details are not described herein.

For example, if a user requests video performance data, the processing result includes data of some performance parameters (such as an initial buffer delay, a quantity of interruption times, and an interruption delay) in the analysis result; or if the service request is a request for adding a new virtual network element node, the processing result is as follows: Virtual resources are correspondingly combined according to the analysis result.

The domain function entity 201 is further configured to: receive the processing result sent by the first virtual network function node, and feed back the processing result to the OSS 202.

Further, the OSS 202 may be further configured to:
feed back the processing result to the user by using the user interaction interface; or send the processing result to a handheld terminal of the user, so that the user can select and view the processing result.

Optionally, in this embodiment of the present invention, the network management system 20 may include at least one domain function entity, and one domain function entity processes service requests of only one domain, so as to avoid inconvenience caused by cross network service processing, and avoid a problem that load of a domain function entity increases when processing functions of different domains are implemented by the domain function entity.

Correspondingly, the OSS 202 is specifically configured to:
determine, according to the service request, a network type corresponding to the service request; and
send the service request to a domain function entity corresponding to the network type.

The network type may include: a fixed network, a mobile network, and another new network added later with development of communications technologies. The network type corresponding to the service request may be a network type of a network on which a user that sends the service request is located; for example, if a mobile network user sends the service request, the network type corresponding to the service request is a mobile network.

The domain function entity corresponding to the network type is a domain function entity specially configured to perform related processing according to a service request sent by a network of this network type. The domain function entity may be a mobile domain function entity, or may be a fixed domain function entity. The mobile domain function entity is configured to process a service request of a mobile network. The fixed domain function entity is configured to process a service request of a fixed network.

For example, if a service request is from a mobile network, the network type is a mobile network. Because a domain function entity 1 processes only mobile network services, and a domain function entity 2 processes only fixed network services, a domain function entity corresponding to the service request is the domain function entity 1 instead of the domain function entity 2.

Optionally, the virtual function node in the network management system provided in the present invention may include: at least one virtualized network function (virtualized network function, VNF for short), network functions virtualization infrastructure (NFV infrastructure, NFVI for short), network functions virtualization management and orchestration (NFV Management and Orchestration, NFV MANO for short), and some new virtual function nodes added later with development of communications technologies.

The NFV MANO may include three parts: a network functions virtualization orchestrator (NFV Orchestrator, NFVO for short), a virtualized network function manager (VNF Manager, VNFM for short), and a virtualized infrastructure manager (Virtualised Infrastructure Manager, VIM for short). In addition, to implement interaction between the domain function entity and the VNF, the network management system further needs to include an element manager (element manager, EM for short) between the domain function entity and the VNF. Each EM manages one or more VNFs. Alternatively, an EM may not be included, so that the domain function entity and the VNF are directly connected to each other. This is not limited in this embodiment of the present invention. In this specification, the network management system is merely described by using an example in which there is an EM between the domain function entity and the VNF.

Optionally, when a network management system includes an EM 2031, a VNF 2032, an NFVI 2033, and an NFV MANO 2034, as shown in FIG. 4A, an architecture of the network management system 20 may be as follows:

The OSS 202 is connected to the domain function entity 201. The domain function entity is connected to the EM 2031 and the NFV MANO 2034. The EM 2031 is connected to the VNF 2032. The VNF 2032 is connected to the NFVI 2033. The NFV MANO 2034 is separately connected to the EM 2031, the VNF 2032, and the NFVI 2033.

The EM 2031, the VNF 2034, the NFVI 2033, and the NFV MANO 2034 have functions same as those of an EM, a VNF, an NFVI, and an NFV MANO in an NFV architecture shown in FIG. 1. Details are not described herein again.

The following separately describes specific functions of the OSS, the domain function entity, the EM, the VNF, the NFVI, and the NFV MANO when the service request is a video performance data request, a network service (network service, NS for short) instantiation request, or a network planning request.

### (1) The network service request is a video performance data request.

The OSS 202 is configured to: receive a video performance data request sent by a user, and send the video performance data request to a mobile domain function entity.

The video performance data request is from a mobile network, and is used to request to obtain video experience analysis data of the mobile network.

The mobile domain function entity 201 is configured to perform analysis according to an analysis algorithm, so as to obtain a parameter that can reflect video performance.

The parameter may accurately reflect video experience of a user, including at least one of an initial buffer delay, a quantity of interruption times, or an interruption delay.

The mobile domain function entity 201 is further configured to: receive service data that is sent by the EM and that is corresponding to the parameter, process the received service data, and then send the processed service data to the OSS 202, so that the OSS 202 feeds back the processed service data to the user.

Specifically, the mobile domain function entity 201 may be configured to: send the video performance data request and an analysis result including the parameter to the EM, and receive service data that is obtained, by the EM according to the parameter, from a VNF managed by the EM; or
receive service data that is corresponding to the parameter and that is collected and proactively reported by the EM.

A data obtaining process between the EM and the VNF is an existing process. Details are not described in the present invention. That the received service data is processed may include: collecting statistics about the service data, so as to form data or a dynamic image that can directly reflect video experience of a user.

For example, the service data includes a large quantity of interruption delays. In this case, the data may be converted into data whose interruption delay is relatively high or low, or the like and that directly reflects video experience of a user.

### (2) The network service request is an NS instantiation request.

The OSS 202 is configured to: receive an NS instantiation request send by a user, and send the NS instantiation request to the mobile domain function entity 201.

The NS instantiation request is from a mobile network, and is used to request to allocate a corresponding resource to the user, so as to meet a specific requirement of the user, such as reducing a delay or enhancing user experience.

The mobile domain function entity 201 is configured to: analyze, according to an analysis algorithm, a resource required for NS instantiation, execute a corresponding configuration policy, and send the NS instantiation request and the configuration information to the NFVO in the NFV MANO.

The NFVO is configured to: perform the NS instantiation according to the configuration information, and send an NS instantiation success message to the domain function entity, so that the domain function entity sends the NS instantiation success message to the OSS.

A process of the NS instantiation is the prior art. Details are not described herein.

### (3) The network service request is a network planning request.

The OSS 202 is configured to: receive a network planning request send by a user, and send the network planning request to the mobile domain function entity 201.

The network planning request may be a network planning request for a mobile network, and is used to request to: add a new network element node to the network management system; or
modify a feature of an existing network node in the network management system, such as a capacity.

The mobile domain function entity 201 is configured to: analyze, according to an analysis algorithm, a resource required for the network planning request, execute a corresponding configuration policy, and send the network planning request and the configuration information to the NFVO in the NFV MANO.

For example, if the network planning request is adding a new network element node, the configuration policy is to configure related resources that form the network element node, and enable the network element node formed according to the configuration to have functions same as those of an entity node.

The NFVO is configured to: perform the network planning according to the configuration information, and send a network planning success message to the domain function entity, so that the domain function entity sends the network planning success message to the OSS.

A process of the network planning is the prior art. Details are not described herein.

It may be learned from the foregoing description that compared with an existing NFV architecture, a domain function entity is added to a network management architecture in this embodiment. The domain function entity uses a corresponding algorithm to analyze a service request, so that an OSS no longer performs algorithm analysis on a received service request, thereby greatly reducing load of the OSS.

### Embodiment 4

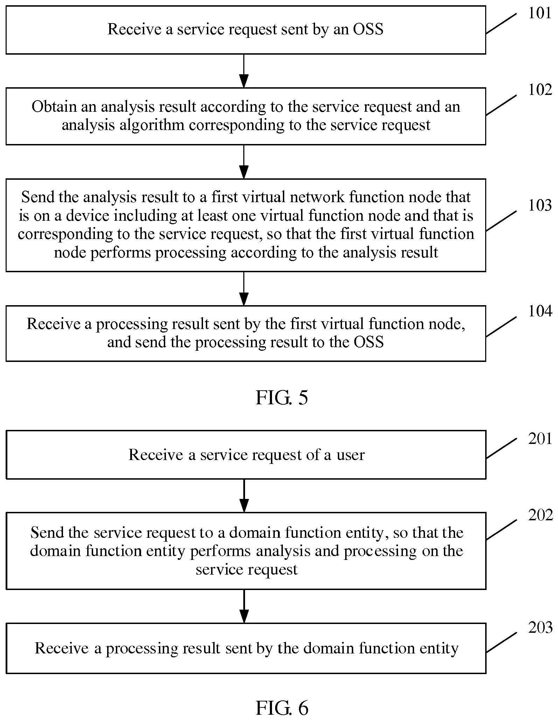

FIG. 5 shows a flowchart of a network management method according to an embodiment of the present invention. The method is applied to the domain function entity in Embodiment 1. The method may include the following steps.

101. Receive a service request sent by an OSS.

The first virtual network function node corresponding to the service request may be a virtual network function node that performs related processing according to the analysis result and whose processing result can meet the service request of the user.

102. Obtain an analysis result according to the service request and an analysis algorithm corresponding to the service request.

It should be noted that in this embodiment of the present invention, the domain function entity uses different analysis algorithms to perform processing for different service requests. The analysis algorithm may be an algorithm used by an OSS in an existing NFV architecture for a service request received by the OSS, or may be an algorithm innovated later with development of communications technologies.

For example, if the service request is a video performance data request, an analysis algorithm corresponding to the service request may be an algorithm that can be used to accurately obtain specific parameters (such as an initial buffer delay, a quantity of interruption times, and an interruption delay) that reflect video performance, and that can be used to perform pre-analysis after video performance data is received; for example, a mean opinion score (mean opinion score, MOS) algorithm is used to calculate a score of customer experience to represent customer experience, and the score of customer experience is fed back to the OSS. If the service request is a request for adding a new virtual network element node, an analysis algorithm corresponding to the service request is an algorithm that can be used to quantitatively calculate a quantity of virtual resources (such as a computing resource, a storage resource, and a network resource) that need to be combined to implement a function of the network element entity.

103. Send the analysis result to the first virtual network function node that is on a device including at least one virtual function node and that is corresponding to the service request, so that the first virtual function node performs processing according to the analysis result.

104. Receive a processing result sent by the first virtual function node, and send the processing result to the OSS.

For example, if a user requests video performance data, the processing result includes data of some performance parameters (such as an initial buffer delay, a quantity of interruption times, and an interruption delay) in the analysis result; or if the service request is a request for adding a new virtual network element node, the processing result is as follows: Virtual resources are correspondingly combined according to the analysis result.

Optionally, in this embodiment of the present invention, the domain function entity processes service requests of only one domain, so as to avoid inconvenience caused by cross network service processing, and avoid a problem that load of a domain function entity increases when processing functions of different domains are implemented by the domain function entity. The domain function entity may be a mobile domain function entity, may be a fixed domain function entity, or may be a domain function entity of another new domain added with development of communications technologies.

The mobile domain function entity is configured to process a service request of a mobile network.

The fixed domain function entity is configured to process a service request of a fixed network.

It may be learned from the foregoing description that this embodiment of the present invention provides a network management method, including: receiving a service request sent by an OSS; obtaining an analysis result according to the service request and an analysis algorithm corresponding to the service request; sending the analysis result to the first virtual network function node that is on a device including at least one virtual function node and that is corresponding to the service request; receiving a processing result fed back by the device after the device performs processing according to the analysis result; and sending the processing result to the OSS. Therefore, the domain function entity replaces the OSS to perform an execution function of obtaining an analysis result according to a service request and an analysis algorithm corresponding to the service request, thereby greatly reducing load of the OSS.

### Embodiment 5

FIG. 6 shows a flowchart of a network management method according to an embodiment of the present invention. The method is applied to the OSS in Embodiment 2. As shown in FIG. 6, the method may include the following steps.

201. Receive a service request of a user.

The service request may be sent by the user by using a user interaction interface of the OSS; or
may be sent by the user by using a handheld terminal of the user.

202. Send the service request to a domain function entity, so that the domain function entity performs analysis and processing on the service request.

203. Receive a processing result sent by the domain function entity.

Optionally, the OSS may further feed back the processing result to the user by using the user interaction interface, or send the processing result to a handheld terminal of the user, so that the user can select and view the processing result.

Optionally, in this embodiment of the present invention, the service request further needs to be sent to a specialized domain function entity, so as to avoid inconvenience caused by cross network service processing, and avoid a problem that load of a domain function entity increases when processing functions of different domains are implemented by the domain function entity. The network management method may further include:
determining, according to the service request, a network type corresponding to the service request; and
sending the service request to a domain function entity corresponding to the network type.

The network type may include: a fixed network, a mobile network, and another new network added later with development of communications technologies.

The network type corresponding to the service request may be a network type of a network on which a user that sends the service request is located; for example, if a mobile network user sends the service request, the network type corresponding to the service request is a mobile network.

The domain function entity corresponding to the network type is a domain function entity specially configured to perform related processing according to a service request sent by a network of this network type. The domain function entity may be a mobile domain function entity, or may be a fixed domain function entity. The mobile domain function entity is configured to process a service request of a mobile network. The fixed domain function entity is configured to process a service request of a fixed network.

For example, if a service request is from a mobile network, the network type is a mobile network. Because a domain function entity 1 processes only mobile network services, and a domain function entity 2 processes only fixed network services, a domain function entity corresponding to the service request is the domain function entity 1 instead of the domain function entity 2.

It may be learned from the foregoing description that this embodiment of the present invention provides a network management method, including: receiving a service request of a user; sending the service request to a domain function entity, so that the domain function entity performs analysis and processing on the service request; and feeding back, to the user, a processing result fed back by the domain function entity. Therefore, the OSS no longer performs analysis and processing on a service request, thereby greatly reducing load of the OSS.

### Embodiment 6

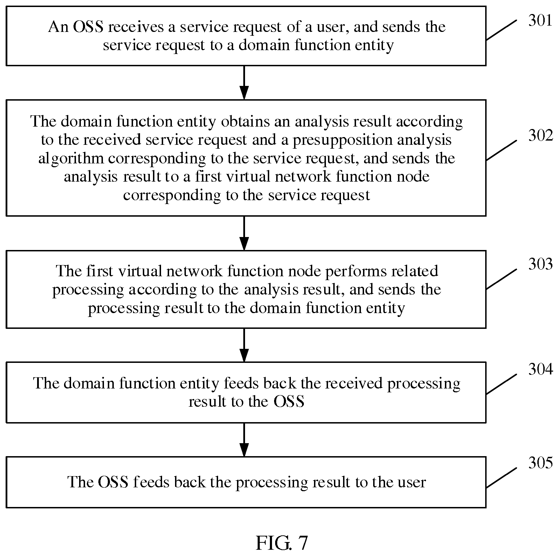

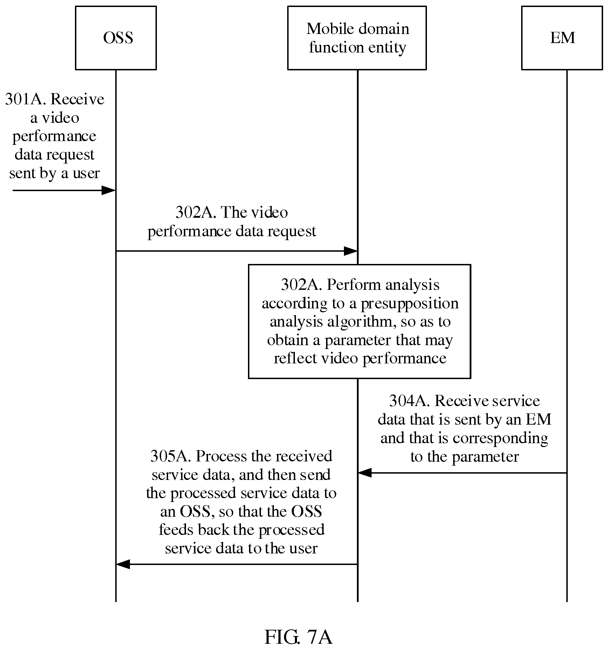

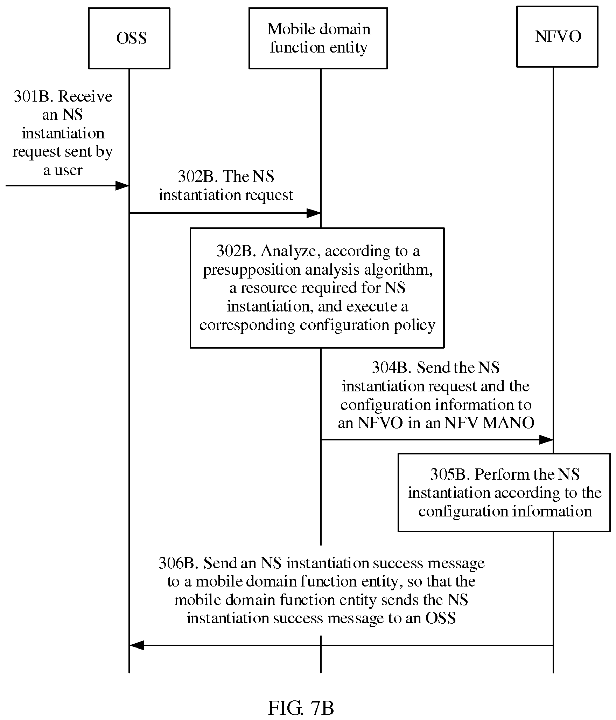

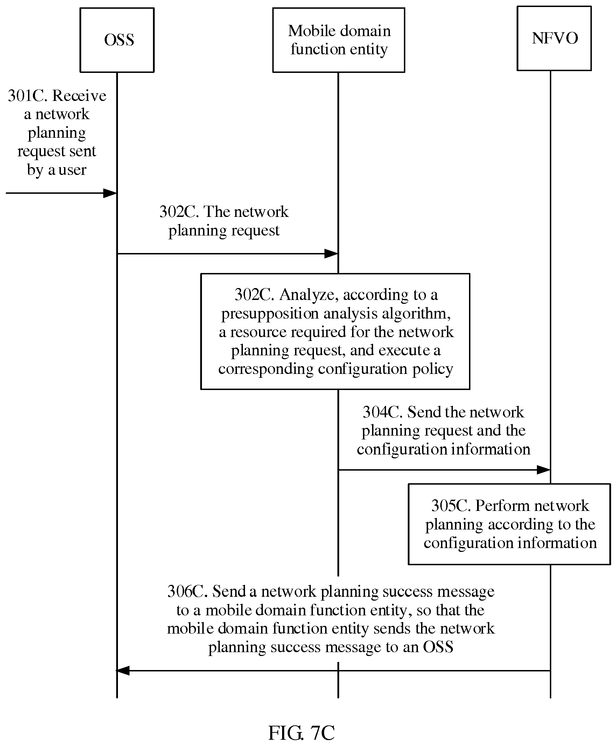

FIG. 7 shows a flowchart of still another network management method according to an embodiment of the present invention. The method is applied to the network management system in Embodiment 3. The network management system includes: an OSS, at least one domain function entity, and at least one virtual function node. As shown in FIG. 7, the method may include the following steps.

301. An OSS receives a service request of a user, and sends the service request to a domain function entity.

The service request may be sent by the user by using a user interaction interface of the OSS; or
may be sent by the user by using a handheld terminal of the user.

302. The domain function entity obtains an analysis result according to the received service request and an analysis algorithm corresponding to the service request, and sends the analysis result to a first virtual network function node corresponding to the service request.

303. The first virtual network function node performs related processing according to the analysis result, and sends the processing result to the domain function entity.

304. The domain function entity feeds back the received processing result to the OSS.

305. The OSS feeds back the processing result to the user.

Preferably, the OSS may feed back the processing result to the user by using the user interaction interface; or
send the processing result to a handheld terminal of the user, so that the user can select and view the processing result.

Optionally, in this embodiment of the present invention, the network management system 20 may include at least one domain function entity, and one domain function entity processes service requests of only one domain, so as to avoid inconvenience caused by cross network service processing, and avoid a problem that load of a domain function entity increases when processing functions of different domains are implemented by the domain function entity.

Correspondingly, that the OSS receives a service request of a user, and sends the service request to a domain function entity may include:
determining, by the OSS, according to the service request, a network type corresponding to the service request; and
sending the service request to a domain function entity corresponding to the network type.

The network type may include: a fixed network, a mobile network, and another new network added later with development of communications technologies. The network type corresponding to the service request may be a network type of a network on which a user that sends the service request is located; for example, if a mobile network user sends the service request, the network type corresponding to the service request is a mobile network.

The domain function entity corresponding to the network type is a domain function entity specially configured to perform related processing according to a service request sent by a network of this network type. The domain function entity may be a mobile domain function entity, or may be a fixed domain function entity. The mobile domain function entity is configured to process a service request of a mobile network. The fixed domain function entity is configured to process a service request of a fixed network.

For example, if a service request is from a mobile network, the network type is a mobile network. Because a domain function entity 1 processes only mobile network services, and a domain function entity 2 processes only fixed network services, a domain function entity corresponding to the service request is the domain function entity 1 instead of the domain function entity 2.

Optionally, the virtual function node in the network management system provided in the present invention may include: at least one virtualized network function (virtualized network function, VNF for short), network functions virtualization infrastructure (NFV infrastructure, NFVI for short), network functions virtualization management and orchestration (NFV Management and Orchestration, NFV MANO for short), and some new virtual function nodes added later with development of communications technologies. The NFV MANO may include three parts: a network functions virtualization orchestrator (NFV Orchestrator, NFVO for short), a virtualized network function manager (VNF Manager, VNFM for short), and a virtualized infrastructure manager (Virtualised Infrastructure Manager, VIM for short).

In addition, to implement interaction between the domain function entity and the VNF, the network management system further needs to include an element manager (element manager, EM for short) between the domain function entity and the VNF. Each EM manages one or more VNFs. Alternatively, an EM may not be included, so that the domain function entity and the VNF are directly connected to each other. This is not limited in this embodiment of the present invention. In this specification, the network management system is merely described by using an example in which there is an EM between the domain function entity and the VNF.

When a network management system includes several function nodes: an EM, a VNF, an NFVI, and an NFV MANO, in the network management system, the OSS may be connected to the domain function entity; the domain function entity may be connected to the EM and the NFV MANO; the EM may be connected to the VNF; the VNF may be connected to the NFVI, the EM, and the VNFM; and the NFV MANO may be separately connected to the EM, the VNF, and the NFVI. The VNF, the NFVI, and the NFV MANO have functions same as those of a VNF, an NFVI, and an NFV MANO in an existing NFV architecture shown in FIG. 1. Details are not described herein again.

The following separately describes in detail interaction between the OSS, the domain function entity, the VNF, the NFVI, and the NFV MANO when the service request is a video performance data request, a network service (network service, NS for short) instantiation request, or a network planning request.

FIG. 7A shows a flowchart of a network management method provided in the present invention when the network service request is a video performance data request. As shown in FIG. 7A, the method may include the following steps.

301A. An OSS receives a video performance data request sent by a user.

The video performance data request is from a mobile network, and is used to request to obtain video experience analysis data of a user of the mobile network.

302A. The OSS sends the video performance data request to a mobile domain function entity.

303A. The mobile domain function entity performs analysis according to an analysis algorithm, so as to obtain a parameter that may reflect video performance.

The parameter may accurately reflect video experience of a user, including at least one of an initial buffer delay, a quantity of interruption times, or an interruption delay.

304A. The mobile domain function entity receives service data that is sent by an EM and that is corresponding to the parameter.

Preferably, the mobile domain function entity may send the video performance data request and an analysis result including the parameter to the EM, and receive the service data that is obtained, by the EM according to the parameter, from a VNF managed by the EM.

Alternatively, the mobile domain function entity receives service data that is corresponding to the parameter and that is collected and proactively reported by the EM.

Specifically, a data obtaining process between the EM and the VNF is an existing process. Details are not described in the present invention.

305A. The mobile domain function entity processes the received service data, and then sends the processed service data to the OSS, so that the OSS feeds back the processed service data to the user.

That the received service data is processed may include: collecting statistics about the service data, so as to form data or a dynamic image that can directly reflect video experience of a user. For example, the service data includes a large quantity of interruption delays. In this case, the data may be converted into data whose interruption delay is relatively high or low, or the like and that directly reflects video experience of a user.

FIG. 7B shows a flowchart of a network management method provided in the present invention when the network service request is an NS instantiation request. As shown in FIG. 7B, the method may include the following steps.

301B. An OSS receives an NS instantiation request sent by a user.

The NS instantiation request is from a mobile network, and is used to request to allocate a corresponding resource to the user, so as to meet a specific requirement of the user, such as reducing a delay or enhancing user experience.

302B. The OSS sends the NS instantiation request to a mobile domain function entity.

303B. The mobile domain function entity analyzes, according to an analysis algorithm, a resource required for NS instantiation, and executes a corresponding configuration policy.

304B. The mobile domain function entity sends the NS instantiation request and the configuration information to an NFVO in an NFV MANO.

305B. The NFVO performs the NS instantiation according to the configuration information.

A process of the NS instantiation is the prior art. Details are not described herein.

306B. The NFVO sends an NS instantiation success message to the mobile domain function entity, so that the mobile domain function entity sends the NS instantiation success message to the OSS.

FIG. 7C shows a flowchart of a network management method provided in the present invention when the network service request is a network planning request. As shown in FIG. 7C, the method may include the following steps.

301C. An OSS receives a network planning request sent by a user.

The network planning request may be a network planning request for a mobile network, and is used to request to: add a new network element node to the network management system, or modify a feature of an existing network node in the network management system, such as a capacity.

302C. The OSS sends the network planning request to a mobile domain function entity.

303C. The mobile domain function entity analyzes, according to an analysis algorithm, a resource required for the network planning request, and executes a corresponding configuration policy.

For example, if the network planning request is adding a new network element node, the configuration policy is to configure related resources that form the network element node, and enable the network element node formed according to the configuration to have functions same as those of an entity node.

304C. The mobile domain function entity sends the network planning request and the configuration information to an NFVO in an NFV MANO.

305C. The NFVO performs network planning according to the configuration information.

A process of the network planning is the prior art. Details are not described herein.

306C. The NFVO sends a network planning success message to the mobile domain function entity, so that the mobile domain function entity sends the network planning success message to the OSS.

It may be learned from the foregoing description that in the network management method provided in this embodiment, a domain function entity uses a corresponding algorithm to perform analysis and processing on a service request, so that an OSS no longer performs algorithm analysis on a received service request, thereby greatly reducing load of the OSS.

### Embodiment 7

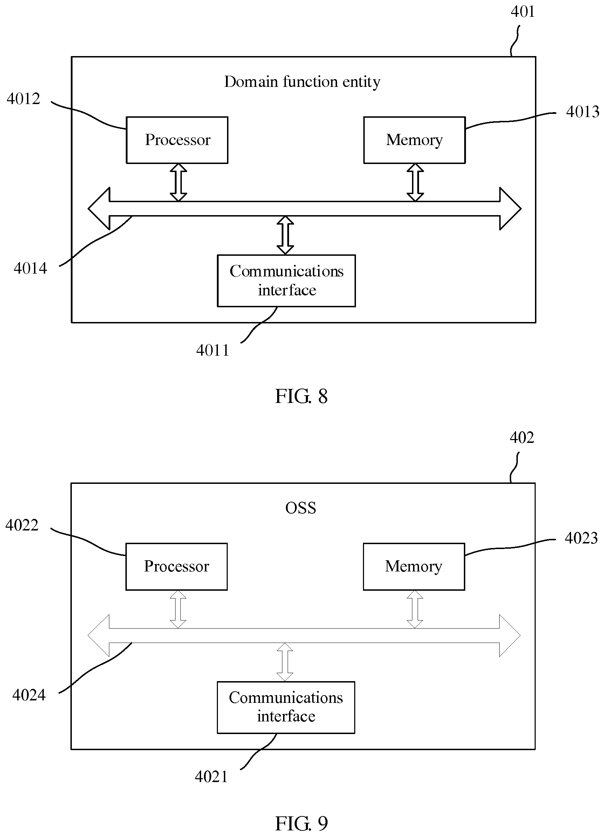

FIG. 8 is a structural diagram of a domain function entity 401 according to an embodiment of the present invention. The domain function entity may be connected to a virtual function node by using an internal management interface of an operator, and is responsible for a network management function of a network of a type corresponding to each domain function entity, such as alarming, traffic measurement, configuration management, or network planning.

As shown in FIG. 8, the domain function entity 401 may include: a communications interface 4011, a processor 4012, a memory 4013, and at least one communications bus 4014 that is configured to implement connection and mutual communication between these apparatuses.

The communications interface 4011 is an interface implemented by hardware, for example, a user interaction interface. The communications interface 4011 is configured to implement input and output functions of a device on which the communications interface is located, may collect touch operations performed on the interface or near the interface by a user (for example, a user uses any appropriate object or accessory, such as a finger or a stylus, to perform an operation on the communications interface), and drive a corresponding connection apparatus according to a preset program; and may be further configured to send information entered by a user or information provided for a user. Alternatively, the communications interface 4011 may be an interface implemented by software. This is not limited in this embodiment of the present invention.

The processor 4012 may be a central processing unit (central processing unit, CPU for short).

The memory 4013 may be a volatile memory (volatile memory), for example, a random access memory (random-access memory, RAM for short); a non-volatile memory (non-volatile memory), for example, a read-only memory (read-only memory, ROM for short), a flash memory (flash memory), a hard disk drive (hard disk drive, HDD for short), or a solid-state drive (solid-state drive, SSD for short); or a combination of the foregoing types of memories. The memory 4013 is configured to provide an instruction and data for a processor on a device on which the memory is located.

The communications interface 4011 is configured to receive a service request sent by an OSS.

The processor 4012 is configured to obtain an analysis result according to the service request and an analysis algorithm corresponding to the service request.

The communications interface 4011 is further configured to: send the analysis result to the first virtual network function node that is on a device including at least one virtual function node and that is corresponding to the service request;
receive a processing result fed back by the device after the device performs processing according to the analysis result; and
send the processing result to the OSS.

It should be noted that in this embodiment of the present invention, the domain function entity uses different analysis algorithms to perform processing for different service requests. The analysis algorithm may be an algorithm used by an OSS in an existing NFV architecture for a service request received by the OSS, or may be an algorithm innovated later with development of communications technologies.

For example, if the service request is a video performance data request, an analysis algorithm corresponding to the service request may be an algorithm that can be used to accurately obtain specific parameters (such as an initial buffer delay, a quantity of interruption times, and an interruption delay) that reflect video performance, and that can be used to perform pre-analysis after video performance data is received; for example, a mean opinion score (mean opinion score, MOS) algorithm is used to calculate a score of customer experience to represent customer experience, and the score of customer experience is fed back to the OSS. If the service request is a request for adding a new virtual network element node, an analysis algorithm corresponding to the service request is an algorithm that can be used to quantitatively calculate a quantity of virtual resources (such as a computing resource, a storage resource, and a network resource) that need to be combined to implement a function of the network element entity.

Optionally, in this embodiment of the present invention, the domain function entity processes service requests of only one domain, so as to avoid inconvenience caused by cross network service processing, and avoid a problem that load of a domain function entity increases when processing functions of different domains are implemented by the domain function entity. The domain function entity may be a mobile domain function entity, may be a fixed domain function entity, or may be a domain function entity of another new domain added with development of communications technologies.

The mobile domain function entity is configured to process a service request of a mobile network.

The fixed domain function entity is configured to process a service request of a fixed network.

It may be learned from the foregoing description that this embodiment of the present invention provides a domain function entity, configured to: receive a service request sent by an OSS; obtain an analysis result according to the service request and an analysis algorithm corresponding to the service request; send the analysis result to the first virtual network function node that is on a device including at least one virtual function node and that is corresponding to the service request; receive a processing result fed back by the device after the device performs processing according to the analysis result; and send the processing result to the OSS. Therefore, the domain function entity replaces the OSS to perform an execution function of obtaining an analysis result according to a service request and an analysis algorithm corresponding to the service request, thereby greatly reducing load of the OSS.

### Embodiment 8

FIG. 9 is a structural diagram of an OSS 402 according to an embodiment of the present invention. Different from a conventional network management node, the OSS 402 is no longer responsible for a network management function of a network, such as alarming, traffic measurement, configuration management, or network planning, but is connected to a domain function entity by using an internal management interface of an operator. The OSS 402 sends a received service request to a corresponding domain function entity, so that the domain function entity performs a related processing function according to the service request.

As shown in FIG. 9, the OSS 402 may include: a communications interface 4021, a processor 4022, a memory 4023, and at least one communications bus 4024 that is configured to implement connection and mutual communication between these apparatuses.

The communications interface 4021 may be an interface implemented by hardware, for example, a user interaction interface. The communications interface 4021 is configured to implement input and output functions of a device on which the communications interface is located, may collect touch operations performed on the interface or near the interface by a user (for example, a user uses any appropriate object or accessory, such as a finger or a stylus, to perform an operation on the communications interface), and drive a corresponding connection apparatus according to a preset program; and may be further configured to send information entered by a user or information provided for a user. Alternatively, the communications interface 4021 may be an interface implemented by software. This is not limited in this embodiment of the present invention.

The processor 4022 may be a central processing unit (central processing unit, CPU for short).

The memory 4023 may be a volatile memory (volatile memory), for example, a random access memory (random-access memory, RAM for short); a non-volatile memory (non-volatile memory), for example, a read-only memory (read-only memory, ROM for short), a flash memory (flash memory), a hard disk drive (hard disk drive, HDD for short), or a solid-state drive (solid-state drive, SSD for short); or a combination of the foregoing types of memories. The memory 4023 is configured to provide an instruction and data for a processor on a device on which the memory is located.

The communications interface 4021 is configured to receive a service request of a user;
send the service request to a domain function entity, so that the domain function entity performs analysis and processing on the service request; and
receive a processing result fed back by the domain function entity, and feed back the processing result to the user.

The service request may be sent by the user by using a user interaction interface of the OSS 202; or
may be sent by the user by using a handheld terminal of the user.

Optionally, the communications interface 4021 may feed back the processing result to the user by using the user interaction interface; or
send the processing result to a handheld terminal of the user, so that the user can select and view the processing result.

Optionally, in this embodiment of the present invention, the service request further needs to be sent to a specialized domain function entity, so as to avoid inconvenience caused by cross network service processing, and avoid a problem that load of a domain function entity increases when processing functions of different domains are implemented by the domain function entity. Specific implementation is as follows:

The processor 4022 is configured to determine, according to the service request, a network type corresponding to the service request.

The communications interface 4021 is specifically configured to send the service request to a domain function entity corresponding to the network type.

The network type may include: a fixed network, a mobile network, and another new network added later with development of communications technologies. The network type corresponding to the service request may be a network type of a network on which a user that sends the service request is located; for example, if a mobile network user sends the service request, the network type corresponding to the service request is a mobile network.

The domain function entity corresponding to the network type is a domain function entity specially configured to perform related processing according to a service request sent by a network of this network type. The domain function entity may be a mobile domain function entity, or may be a fixed domain function entity. The mobile domain function entity is configured to process a service request of a mobile network. The fixed domain function entity is configured to process a service request of a fixed network.

For example, if a service request is from a mobile network, the network type is a mobile network. Because a domain function entity 1 processes only mobile network services, and a domain function entity 2 processes only fixed network services, a domain function entity corresponding to the service request is the domain function entity 1 instead of the domain function entity 2.

It may be learned from the foregoing description that this embodiment of the present invention provides an OSS, configured to: receive a service request of a user; send the service request to a domain function entity, so that the domain function entity performs analysis and processing on the service request; and feed back, to the user, a processing result fed back by the domain function entity. Therefore, the OSS no longer performs analysis and processing on a service request, thereby greatly reducing load of the OSS.

### Embodiment 9

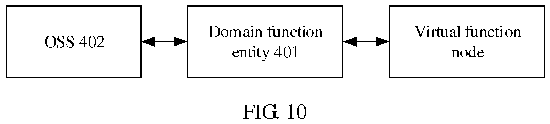

FIG. 10 shows a diagram of an architecture of a network management system 40 according to an embodiment of the present invention. The system 40 is configured to perform the method in Embodiment 6. As shown in FIG. 10, the system 40 may include: an OSS 402, a domain function entity 401, and at least one virtual function node.

The OSS 402 has functions same as those of the OSS 402 in Embodiment 7. Different from a conventional network management node, the OSS 402 is no longer responsible for a network management function of a network, such as alarming, traffic measurement, configuration management, or network planning, but is connected to a domain function entity by using an internal management interface of an operator. The OSS 402 sends a received service request to a corresponding domain function entity, so that the domain function entity performs a related processing function according to the service request.

The domain function entity 401 has functions same as those of the domain function entity 401 in Embodiment 8. The domain function entity 401 may be connected to a virtual function node by using an internal management interface of an operator, and is responsible for a network management function of a network of a type corresponding to each domain function entity, such as alarming, traffic measurement, configuration management, or network planning.

The virtual function node may be located on any shared device that is used by an operator to provide a network service; for example, the virtual function node is located on a shared server, a storage device, or a switch. The virtual function node is a node that is obtained by using a standard virtualization technology and that has functions same as those of various information infrastructure devices deployed in a data center, on a network node, or on premises of an end user, such as a router, a firewall, a load balancer, a switch, or a server. The virtual function node no longer directly interacts with the OSS, but is connected to the domain function entity 401 by using an internal management interface of the operator, so as to provide various services for a user.

The OSS 402 is configured to: receive a service request of a user, and send the service request to the domain function entity 401.

The service request may be sent by the user by using a user interaction interface of the OSS 402, or may be sent to the OSS 402 by the user by using a handheld terminal of the user.

The domain function entity 401 is configured to: receive the service request sent by the OSS 402, obtain an analysis result according to the service request and an analysis algorithm corresponding to the service request, and send the analysis result to the first virtual network function node corresponding to the service request.

According to a source, a service request may be classified into: a mobile network service request, a fixed network service request, and another network service request.

It should be noted that in this embodiment of the present invention, the domain function entity uses different analysis algorithms to perform processing for different service requests. The analysis algorithm may be an algorithm used by an OSS in an existing NFV architecture for a service request received by the OSS, or may be an algorithm innovated later with development of communications technologies.

For example, if the service request is a video performance data request, an analysis algorithm corresponding to the service request may be an algorithm that can be used to accurately obtain specific parameters (such as an initial buffer delay, a quantity of interruption times, and an interruption delay) that reflect video performance, and that can be used to perform presupposition analysis after video performance data is received; for example, a mean opinion score (mean opinion score, MOS) algorithm is used to calculate a score of customer experience to represent customer experience, and the score of customer experience is fed back to the OSS. If the service request is a request for adding a new virtual network element node, an analysis algorithm corresponding to the service request is an algorithm that can be used to quantitatively calculate a quantity of virtual resources (such as a computing resource, a storage resource, and a network resource) that need to be combined to implement a function of the network element entity.

The first virtual network function node corresponding to the service request may be a virtual network function node that performs related processing according to the analysis result and whose processing result can meet the service request of the user.

The first virtual network function node is configured to: perform related processing according to the analysis result sent by the domain function entity 401, and send a processing result to the domain function entity 401.

The related processing for different analysis results may be the prior art, such as finding a corresponding node and collecting related information. Details are not described herein.

For example, if a user requests video performance data, the processing result includes data of some performance parameters (such as an initial buffer delay, a quantity of interruption times, and an interruption delay) in the analysis result; or if the service request is a request for adding a new virtual network element node, the processing result is as follows: Virtual resources are correspondingly combined according to the analysis result.

The domain function entity 401 is further configured to: receive the processing result sent by the first virtual network function node, and feed back the processing result to the OSS 402.

Further, the OSS 402 may be further configured to:
feed back the processing result to the user by using the user interaction interface; or send the processing result to a handheld terminal of the user, so that the user can select and view the processing result.

Optionally, in this embodiment of the present invention, the network management system 40 may include at least one domain function entity, and one domain function entity processes service requests of only one domain, so as to avoid inconvenience caused by cross network service processing, and avoid a problem that load of a domain function entity increases when processing functions of different domains are implemented by the domain function entity.

Correspondingly, the OSS 402 is specifically configured to:
determine, according to the service request, a network type corresponding to the service request; and
send the service request to a domain function entity corresponding to the network type.

The network type may include: a fixed network, a mobile network, and another new network added later with development of communications technologies. The network type corresponding to the service request may be a network type of a network on which a user that sends the service request is located; for example, if a mobile network user sends the service request, the network type corresponding to the service request is a mobile network.

The domain function entity corresponding to the network type is a domain function entity specially configured to perform related processing according to a service request sent by a network of this network type. The domain function entity may be a mobile domain function entity, or may be a fixed domain function entity. The mobile domain function entity is configured to process a service request of a mobile network. The fixed domain function entity is configured to process a service request of a fixed network.

For example, if a service request is from a mobile network, the network type is a mobile network. Because a domain function entity 1 processes only mobile network services, and a domain function entity 2 processes only fixed network services, a domain function entity corresponding to the service request is the domain function entity 1 instead of the domain function entity 2.

Optionally, the virtual function node in the network management system provided in the present invention may include: at least one virtualized network function (virtualized network function, VNF for short), network functions virtualization infrastructure (NFV infrastructure, NFVI for short), network functions virtualization management and orchestration (NFV Management and Orchestration, NFV MANO for short), and some new virtual function nodes added later with development of communications technologies. The NFV MANO may include three parts: a network functions virtualization orchestrator (NFV Orchestrator, NFVO for short), a virtualized network function manager (VNF Manager, VNFM for short), and a virtualized infrastructure manager (Virtualised Infrastructure Manager, VIM for short).

In addition, to implement interaction between the domain function entity and the VNF, the network management system further needs to include an element manager (element manager, EM for short) between the domain function entity and the VNF. Each EM manages one or more VNFs. Alternatively, an EM may not be included, so that the domain function entity and the VNF are directly connected to each other. This is not limited in this embodiment of the present invention. In this specification, the network management system is merely described by using an example in which there is an EM between the domain function entity and the VNF.

Optionally, when the network management system includes an EM, a VNF, an NFVI, and an NFV MANO, an architecture of the network management system 40 may be as follows:

The OSS 402 is connected to the domain function entity 401. The domain function entity is connected to the EM and the NFV MANO. The EM is connected to the VNF. The VNF is connected to the NFVI. The NFV MANO is separately connected to the EM, the VNF, and the NFVI. The EM, the VNF, the NFVI, and the NFV MANO have functions same as those of an EM, a VNF, an NFVI, and an NFV MANO in an existing NFV architecture shown in FIG. 1. Details are not described herein again.

The following separately describes specific functions of the OSS, the domain function entity, the EM, the VNF, the NFVI, and the NFV MANO when the service request is a video performance data request, a network service (network service, NS for short) instantiation request, or a network planning request.

### (1) The network service request is a video performance data request.

The OSS 402 is configured to: receive a video performance data request sent by a user, and send the video performance data request to a mobile domain function entity.

The video performance data request is from a mobile network, and is used to request to obtain video experience analysis data of the mobile network.

The mobile domain function entity 401 is configured to perform analysis according to an analysis algorithm, so as to obtain a parameter that can reflect video performance.

The parameter may accurately reflect video experience of a user, including at least one of an initial buffer delay, a quantity of interruption times, or an interruption delay.

The mobile domain function entity 401 is further configured to: receive service data that is sent by the EM and that is corresponding to the parameter, process the received service data, and then send the processed service data to the OSS 402, so that the OSS 402 feeds back the processed service data to the user.

Specifically, the mobile domain function entity 401 may be configured to: send the video performance data request and an analysis result including the parameter to the EM, and receive service data that is obtained, by the EM according to the parameter, from a VNF managed by the EM; or receive service data that is corresponding to the parameter and that is collected and proactively reported by the EM.

A data obtaining process between the EM and the VNF is an existing process. Details are not described in the present invention. That the received service data is processed may include: collecting statistics about the service data, so as to form data or a dynamic image that can directly reflect video experience of a user. For example, the service data includes a large quantity of interruption delays. In this case, the data may be converted into data whose interruption delay is relatively high or low, or the like and that directly reflects video experience of a user.

### (2) The network service request is an NS instantiation request.

The OSS 402 is configured to: receive an NS instantiation request send by a user, and send the NS instantiation request to the mobile domain function entity 401.

The NS instantiation request is from a mobile network, and is used to request to allocate a corresponding resource to the user, so as to meet a specific requirement of the user, such as reducing a delay or enhancing user experience.

The mobile domain function entity 401 is configured to: analyze, according to an analysis algorithm, a resource required for NS instantiation, execute a corresponding configuration policy, and send the NS instantiation request and the configuration information to the NFVO in the NFV MANO.

The NFVO is configured to: perform the NS instantiation according to the configuration information, and send an NS instantiation success message to the domain function entity, so that the domain function entity sends the NS instantiation success message to the OSS.

A process of the NS instantiation is the prior art. Details are not described herein.

### (3) The network service request is a network planning request.

The OSS 402 is configured to: receive a network planning request send by a user, and send the network planning request to the mobile domain function entity 401.

The network planning request may be a network planning request for a mobile network, and is used to request to: add a new network element node to the network management system, or modify a feature of an existing network node in the network management system, such as a capacity.

The mobile domain function entity 401 is configured to: analyze, according to an analysis algorithm, a resource required for the network planning request, execute a corresponding configuration policy, and send the network planning request and the configuration information to the NFVO in the NFV MANO.

For example, if the network planning request is adding a new network element node, the configuration policy is to configure related resources that form the network element node, and enable the network element node formed according to the configuration to have functions same as those of an entity node.

The NFVO is configured to: perform the network planning according to the configuration information, and send a network planning success message to the domain function entity, so that the domain function entity sends the network planning success message to the OSS.

A process of the network planning is the prior art. Details are not described herein.

It may be learned from the foregoing description that compared with an existing NFV architecture, a domain function entity is added to a network management architecture in this embodiment. The domain function entity uses a corresponding algorithm to analyze a service request, so that an OSS no longer performs algorithm analysis on a received service request, thereby greatly reducing load of the OSS.

It may be learned from the foregoing description that compared with an existing NFV architecture, in the network management system in this embodiment, after receiving a service request, an OSS does not perform analysis and processing on the service request according to a corresponding analysis algorithm, thereby greatly reducing load of the OSS.

It may be clearly understood by persons skilled in the art that, for the purpose of convenient and brief description, for a detailed working process of the foregoing unit and system, reference may be made to a corresponding process in the foregoing method embodiments, and details are not described herein again.

In the several embodiments provided in the present application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of hardware, or may be implemented in a form of hardware in addition to a software function unit.

When the foregoing integrated unit is implemented in a form of a software function unit, the integrated unit may be stored in a computer-readable storage medium. The software function unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Persons of ordinary skill in the art may understand that all or a part of the steps of the methods in the embodiments may be implemented by a program instructing relevant hardware (such as a processor). The program may be stored in a computer readable storage medium. The storage medium may include: a read-only memory, a random-access memory, a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A network management system, comprising an operations support device OSS, a domain function entity, and at least one virtual function node, wherein
the OSS is configured to: receive a service request of a user, and send the service request to the domain function entity;
the domain function entity is configured to: receive the service request sent by the OSS, obtain an analysis result according to the service request and an analysis algorithm corresponding to the service request, and send the analysis result to a first virtual network function node corresponding to the service request;
the first virtual network function node is configured to: perform related processing according to the analysis result sent by the domain function entity, and send a processing result to the domain function entity; and
the domain function entity is further configured to: receive the processing result sent by the first virtual network function node, and feed back the processing result to the OSS.

2. The network management system according to claim 1, wherein the network management system comprises at least one domain function entity; and
the at least one domain function entity comprises: a mobile network domain function entity and a fixed network domain function entity; the mobile domain function entity is configured to process a service request of a mobile network; and the fixed domain function entity is configured to process a service request of a fixed network.

3. The network management system according to claim 2, wherein the OSS is specifically configured to:
determine, according to the received service request, a network type corresponding to the service request; and
send the service request to a domain function entity corresponding to the network type, wherein
the network type comprises: a mobile network and a fixed network.

4. The network management system according to any one of claims 1 to 3, wherein the at least one virtual function node comprises: at least any one or more of a virtualized network function VNF, a network functions virtualization infrastructure NFVI, or a network functions virtualization management and orchestration NFV MANO; and the network management system further comprises an element manager EM, wherein the EM is configured to manage at least one VNF; and
the OSS is connected to the domain function entity, and the domain function entity is connected to the EM and the NFV MANO.

5. A domain function entity, comprising:
a receiving unit, configured to receive a service request sent by an OSS;
an analysis unit, configured to obtain an analysis result according to the service request received by the receiving unit and an analysis algorithm corresponding to the service request; and
a sending unit, configured to send the analysis result to the first virtual network function node that is on a device comprising at least one virtual function node and that is corresponding to the service request, so that the first virtual function node performs processing according to the analysis result, wherein
the receiving unit is further configured to receive a processing result sent by the first virtual function node; and
the sending unit is further configured to send the processing result to the OSS.

6. The domain function entity according to claim 5, wherein:
the domain function entity is a mobile domain function entity or a fixed domain function entity; and
the mobile domain function entity is configured to process a service request of a mobile network; and the fixed domain function entity is configured to process a service request of a fixed network.

7. An operations support device OSS, comprising:
a receiving unit, configured to receive a service request of a user; and
a sending unit, configured to send the service request to a domain function entity, so that the domain function entity performs analysis and processing on the service request, wherein
the receiving unit is further configured to receive a processing result sent by the domain function entity.

8. The OSS according to claim 7, wherein the OSS further comprises:
a determining unit, configured to determine, according to the service request, a network type corresponding to the service request, wherein
the sending unit is specifically configured to send the service request to a domain function entity corresponding to the network type.

9. A network management method, applied to a domain function entity, and comprising:
receiving a service request sent by an OSS;
obtaining an analysis result according to the service request and an analysis algorithm corresponding to the service request;
sending the analysis result to the first virtual network function node that is on a device comprising at least one virtual function node and that is corresponding to the service request, so that the first virtual function node performs processing according to the analysis result; and
receiving a processing result sent by the first virtual function node, wherein the domain function entity is further configured to send the processing result to the OSS.

10. The network management method according to claim 9, wherein:
the domain function entity is a mobile domain function entity or a fixed domain function entity; and
the mobile domain function entity is configured to process a service request of a mobile network; and the fixed domain function entity is configured to process a service request of a fixed network.

11. A network management method, applied to an operations support device OSS, and comprising:
receiving a service request of a user;
sending the service request to a domain function entity, so that the domain function entity performs analysis and processing on the service request; and
receiving a processing result sent by the domain function entity.

12. The network management method according to claim 11, wherein after the receiving a service request of a user, the method further comprises:
determining, according to the service request, a network type corresponding to the service request; and
the sending the service request to a domain function entity comprises:
sending the service request to a domain function entity corresponding to the network type.

13. A domain function entity, comprising:
a communications interface, configured to receive a service request sent by an OSS; and
a processor, configured to obtain an analysis result according to the service request received by the communications interface and an analysis algorithm corresponding to the service request, wherein
the communications interface is further configured to send the analysis result to the first virtual network function node that is on a device comprising at least one virtual function node and that is corresponding to the service request, so that the first virtual function node performs processing according to the analysis result; and
the communications interface is further configured to: receive a processing result sent by the first virtual function node, and send the processing result to the OSS.

14. The domain function entity according to claim 13, wherein:
the domain function entity is a mobile domain function entity or a fixed domain function entity; and
the mobile domain function entity is configured to process a service request of a mobile network; and the fixed domain function entity is configured to process a service request of a fixed network.

15. An operations support device OSS, comprising:
a communications interface, configured to receive a service request of a user, wherein
the communications interface is further configured to send the service request to a domain function entity, so that the domain function entity performs analysis and processing on the service request; and
the communications interface is further configured to receive a processing result sent by the domain function entity.

16. The OSS according to claim 15, wherein the OSS further comprises:
a processor, configured to determine, according to the service request, a network type corresponding to the service request, wherein
the communications interface is specifically configured to send the service request to a domain function entity corresponding to the network type.
